# FASCICULE DE BREVET EUROPEEN

(11) **EP 4 655 148 B1**
(45) Date de publication et mention de la délivrance du brevet: **21.10.2026**
(21) Numéro de dépôt: 23821308.6
(22) Date de dépôt: 12.12.2023
(51) Int. Cl.: B29C 33/38, B29C 70/00, B29C 33/42

(54) **PROCÉDÉ DE SÉCHAGE D'UNE PRÉFORME FIBREUSE COMPRENANT UNE ÉTAPE DE MISE EN PLACE DE LA PRÉFORME FIBREUSE À L'INTÉRIEUR D'UN MOULE DE SÉCHAGE**
TROCKNUNGSVERFAHREN FÜR EINE FASERIGE VORFORM, DAS EINEN SCHRITT DER PLATZIERUNG DER FASERIGEN VORFORM IN EINER TROCKNUNGSFORM UMFASST
A DRYING METHOD FOR A FIBROUS PREFORM COMPRISING A STEP OF PLACING THE FIBROUS PREFORM INSIDE A DRYING MOULD

(30) Priorité: 25.01.2023 FR 2300691
(43) Date de publication de la demande: 03.12.2025
(73) Titulaire: SAFRAN, 75015 Paris (FR)
(72) Inventeur: DARBLADE, Maxime Christian, 77550 Moissy-Cramayel (FR); DUNAUD, Sébastien Pierre Roger, 77550 Moissy-Cramayel (FR)
(74) Mandataire: Marconnet, Sébastien
(86) Numéro de dépôt international: PCT/EP2023/085313
(87) Numéro de publication internationale: WO 2024/156424

(56) Documents cités:
- WO-A1-2023/064797
- DE-A1- 10 246 947
- US-B2- 10 093 039
- US-B2- 11 383 424
- US-B2- 11 555 277

## Description

La présente invention porte sur un moule de séchage, et éventuellement de compactage d'une préforme fibreuse. L'invention trouve une application particulièrement avantageuse, mais non exclusive, pour la réalisation d'une pièce de turbomachine à partir d'une préforme tissée.

Il est connu de fabriquer des pièces d'une turbomachine en matériau composite comportant une structure de renfort fibreuse, dite préforme fibreuse, noyée dans une matrice polymérique. La préforme fibreuse est obtenue par tissage 3D au moyen d'un métier à tisser du type Jacquard, tel que décrit dans les documents WO-2013/088037 et FR-3062659. Le métier à tisser permet de fabriquer une préforme tridimensionnelle (3D) par tissage multicouche entre une pluralité de couches de fils de chaîne et une pluralité de couches de fils de trame. Les fils sont par exemple des fils de carbone.

La préforme est en général réalisée à plat c'est-à-dire que la préforme obtenue en sortie du métier à tisser présente une forme générale plate, l'épaisseur de la préforme pouvant toutefois varier. La préforme est ensuite mise en forme, suivant une étape de formage, pour adopter une forme générale proche de celle de la pièce à fabriquer. Cette mise en forme s'effectue par compactage sur l'empreinte d'un moule.

L'enjeu du formage est que cette mise en forme se fasse la plus naturellement possible sans altérer le motif de tissage en surface et au cœur de la préforme. Il est important que les fibres soient malléables pour effectuer ces manipulations, en particulier dans les zones les plus épaisses de la préforme. Cette opération requiert de mouiller abondamment la préforme car les fibres humides glissent mieux entre elles une fois lubrifiées par un liquide de mouillage, en général de l'eau.

Une fois formée, la préforme doit être séchée afin d'évacuer l'eau que l'on ne souhaite pas conserver dans le moule lors de l'injection de la résine. En effet, la présence d'eau est un inconvénient majeur qui pourrait être source de porosité dans la pièce injectée.

Les opérations de séchage et de compactage de la préforme sont réalisées au moyen de moules usinés réalisés en métal, généralement de l'aluminium. Il est possible de prévoir des zones "libres" sans surface de compactage ou des zones d'évacuation d'eau comme des perçages réalisés dans le moule.

Toutefois, ce type de moule peut laisser persister un certain niveau d'humidité et/ou nécessiter une durée de séchage importante pour garantir un séchage correct de la préforme fibreuse.

Le document US11383424 décrit un système de thermoformage d'un objet. Le système comprend un moule et une boîte à pression. Le moule a une surface qui définit la forme de l'objet et comprend deux ou plusieurs parties de porosités différentes. La boîte de pression est conçue pour générer un différentiel de pression sur toute la surface. Les deux ou plusieurs parties appliquent le différentiel de pression à différentes charges, en fonction au moins en partie des porosités différentes, à un matériau disposé sur la surface de manière à former l'objet en déformant le matériau.

Le document US11555277 décrit des structures perforées et des procédés de fabrication de celles-ci. Les structures perforées comprennent des zones de perforations qui sont optimisées pour réguler l'écoulement de gaz ou de liquide à travers la structure perforée. Les structures perforées peuvent être configurées pour être utilisées en tant que moules et pour la fabrication par des processus de fabrication additive.

Le document US 10093039 décrit une pièce tridimensionnelle imprimée à l'aide d'une technique de fabrication additive. La pièce tridimensionnelle comprend une paroi extérieure ayant une surface extérieure définissant une forme d'une pièce et une surface intérieure définissant une cavité intérieure. La pièce comprend une pluralité de sections comportant une pluralité de couches imprimées comprenant une pluralité de segments de paroi qui forment des cellules en forme de triangle.

L'invention vise à remédier efficacement aux inconvénients précités en proposant un moule de séchage d'une préforme fibreuse comportant au moins une partie comprenant des faces internes définissant une empreinte du moule contre laquelle est destinée à venir en contact la préforme fibreuse mouillée par un liquide de mouillage pour être mise en forme, caractérisé en ce que ladite partie présente une structure lacunaire autorisant un passage du liquide de mouillage à travers ladite partie dudit moule, la partie ayant une structure lacunaire étant constituée par une pluralité de filaments entrecroisés définissant des ouvertures traversantes autorisant le passage du liquide de mouillage.

L'invention permet ainsi, grâce à la présence de la partie à structure lacunaire, d'optimiser la durée et le niveau de séchage d'une préforme. En effet, lors d'une opération de compactage, la préforme fibreuse est essorée mécaniquement par une contreforme venant coopérer avec l'empreinte du moule et le liquide de mouillage peut être évacuer vers l'extérieur du moule par la partie ayant une structure lacunaire. En outre, la structure constituée par une pluralité de filaments est facile à fabriquer, car intrinsèquement bien adaptée à une fabrication additive par dépôt de filaments. L'invention permet également d'obtenir une structure très lacunaire, c'est-à-dire très poreuse, favorable à l'évacuation du liquide de mouillage des fibres.

Selon une réalisation de l'invention, un écart entre deux filaments adjacents est compris entre 0.2mm et 2mm, voire entre 0.2mm et 1mm.

Selon une réalisation de l'invention, le moule est obtenu par un procédé de fabrication additive par dépôt de filaments.

Selon une réalisation de l'invention, ledit moule comporte en outre une partie ayant une structure rigide disposée autour de la partie ayant une structure lacunaire.

Selon une réalisation de l'invention, la partie ayant une structure rigide présente une densité supérieure à la partie ayant une structure lacunaire.

Selon une réalisation de l'invention, la partie ayant une structure rigide est réalisée dans un matériau plein.

Selon une réalisation de l'invention, la partie ayant une structure lacunaire et la partie ayant une structure rigide forment une seule et même pièce.

Selon une réalisation de l'invention, ledit moule comporte un raccord pneumatique en communication fluidique avec la partie ayant une structure lacunaire, la partie ayant une structure rigide définissant une enveloppe étanche entourant au moins partiellement la partie ayant une structure lacunaire.

Selon une réalisation de l'invention, la partie ayant une structure lacunaire est réalisé en résine à base de polyétherimide thermoplastique amorphe.

L'invention a également pour objet un procédé de séchage d'une préforme fibreuse comportant au moins une étape de mise en place de la préforme fibreuse à l'intérieur d'un moule de séchage tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une photo d'une vue en perspective d'un moule de compactage et de séchage selon l'invention;
[Fig. 2] La figure 2 est une photo d'une vue de dessus d'un moule de compactage et de séchage selon l'invention;
[Fig. 3] La figure 3 est une photo d'une vue de dessous d'un moule de compactage et de séchage selon l'invention;
[Fig. 4] La figure 4 montre le détail de la structure lacunaire de la partie comprenant l'empreinte du moule de compactage et de séchage selon l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

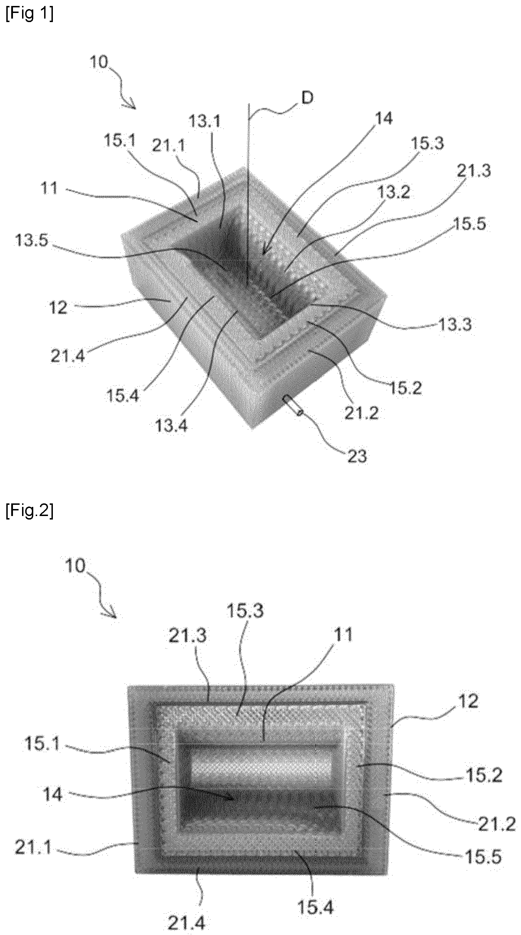

Les figures 1, 2, et 3 montrent un moule 10 de séchage et de compactage d'une préforme fibreuse (non représenté) comportant une partie 11 ayant une structure lacunaire et une partie 12 jouant un rôle de renfort mécanique et/ou d'enveloppe étanche entourant la première partie 11.

La partie 11 ayant une structure lacunaire comprend des faces internes 13.1-13.5 définissant une empreinte 14 du moule 10 contre laquelle est destinée à venir en contact la préforme fibreuse mouillée par un liquide de mouillage, notamment de l'eau, pour être mise en forme. La partie 11 ayant une structure lacunaire autorise le passage du liquide de mouillage à travers ladite partie du moule 10.

La partie 12 ayant une structure rigide est destinée en l'occurrence à assurer une reprise d'effort lors d'une opération de compactage de la préforme fibreuse au moyen d'une contreforme venant coopérer avec l'empreinte 14 du moule 10. La partie 12 ayant une structure rigide est disposée autour de la partie 11 ayant une structure lacunaire. La partie 12 ayant une structure rigide présente une densité supérieure à la partie 11 ayant une structure lacunaire.

Plus précisément, la partie 11 ayant une structure lacunaire comporte deux parois latérales 15.1, 15.2 opposées et parallèles entre elles. La paroi latérales 15.1, 15.2 comprennent chacune respectivement une face interne 13.1, 13.3. Ces parois 15.1, 15.2 sont reliées entre elles par deux autres parois latérales 15.3, 15.4 opposées et globalement parallèles entre elles. Les parois latérales 15.3, 15.4 comprennent chacune respectivement une face interne 13.2, 13.4. La partie 11 présente également une paroi de fond 15.5 comprenant la face interne 13.5. La partie 11 ayant une structure lacunaire présente ainsi une forme parallélépipèdique ouverte dans une direction D perpendiculaire au fond 15.5 pour recevoir la préforme fibreuse.

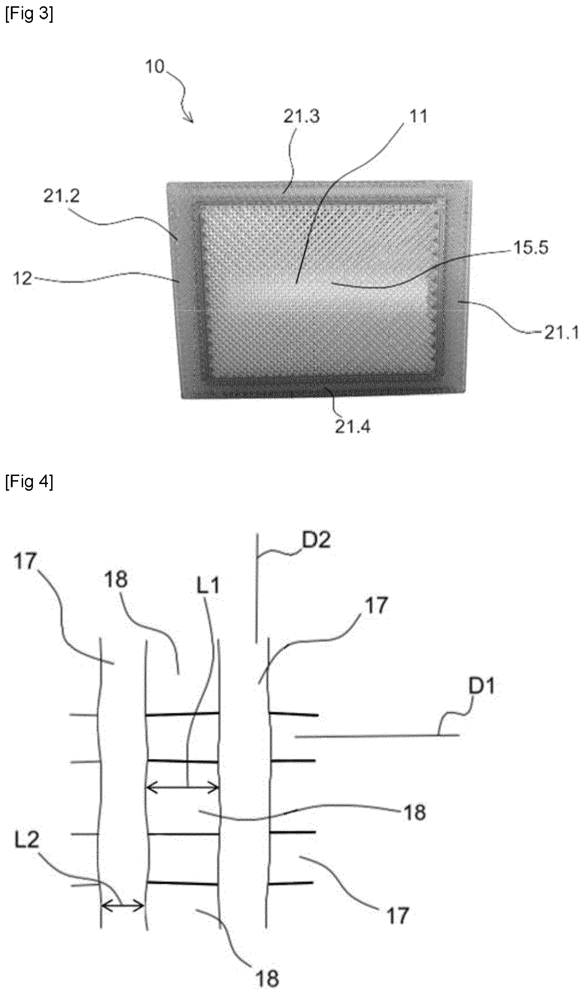

Comme cela est illustré par la figure 4, la partie 11 ayant la structure lacunaire est constituée par une pluralité de filaments 17 entrelacés définissant des ouvertures traversantes 18.

Suivant un exemple de réalisation, un écart L1 entre deux filaments 17 adjacents est compris entre 0.2mm et 2mm, voire entre 0.2mm et 1mm. En dessous de 0,2mm, les filaments 17 sont susceptibles de se coller entre eux et rendent donc la zone "étanche", ce qui est contraire à l'objectif recherche. De plus, un écart trop petit gène l'évacuation du liquide de mouillage. Au-delà de 2mm, la préforme pourrait être marquée et/ou déformée par les fibres du moule. Une largeur L2 ou un diamètre d'un filament 17 est par exemple compris entre 0.2mm et 1 mm, voire entre 0.2mm et 0.5mm.

La structure lacunaire peut comporter une pluralité de premiers filaments 17 parallèles entre eux s'étendant suivant une première direction D1 et une pluralité de deuxièmes filaments 17 parallèles entre eux s'étendant suivant une deuxième direction D2. En l'occurrence, la première direction D1 et la deuxième direction D2 forment un angle de l'ordre de 90 degrés entre elles. En variante, les directions D1 et D2 pourront former un angle de 45 degrés ou tout autre angle non nul adapté à l'application. L'écart L1 peut être mesuré entre deux filaments 17 adjacents s'étendant suivant la direction D1 ou entre deux filaments 17 adjacents s'étendant suivant la direction D2.

Grâce à la présence des ouvertures traversantes 18 entre les filaments 17, la partie 11 autorise une circulation interne du liquide de mouillage depuis au moins une face interne vers au moins une face externe opposée à la face interne de la partie 11. Autrement dit, le liquide de mouillage peut traverser de part en part la partie 11.

Par ailleurs, la partie 12 ayant une structure rigide comporte deux parois latérales 21.1, 21.2 opposées et parallèles entre elles. Les parois latérales 21.1, 21.2 sont reliées entre elles par deux autres parois latérales 21.3, 21.4 opposées et parallèles entre elles.

Les faces internes des parois 21.1, 21.2 de la partie 12 sont en contact avec les faces externes des parois 15.1, 15.2 de la partie 11. Les faces internes des parois 21.3, 21.4 sont en contact avec les faces externes des parois 15.3, 15.4 de la partie 11.

La partie 12 présente ainsi une forme parallélépipèdique définissant une ouverture traversante suivant la direction D d'ouverture de la partie 11 ayant une structure lacunaire. Ainsi, la paroi de fond 15.5 de la partie 11 débouche du côté d'une extrémité de l'ouverture réalisée dans la partie 12.

La partie 12 n'est pas forcément débouchante et peut également comporter un fond situé en regard de la paroi de fond 15.5 de la partie 11 ayant une structure lacunaire. Toutefois, plus le moule 10 présente une configuration ouverte, plus l'humidité de la préforme fibreuse pourra s'évacuer aisément en dehors du moule 10. En outre, le moule 10 requiert moins de matière pour sa fabrication. Il sera donc plus rapide et moins cher à fabriquer.

La partie 12 peut être réalisée dans un matériau plein. La partie 12 ne comporte donc pas de cavité interne susceptible de fragiliser sa structure.

Bien entendu, le moule 10 n'est pas limité à une forme parallélépipèdique et pourra présenter toute autre forme géométrique adaptée à l'application.

Avantageusement, un raccord pneumatique 23 est en communication fluidique avec la partie 11 ayant une structure lacunaire. Le raccord pneumatique 23 est fixé à la partie 12 que ledit raccord pneumatique 23 traverse. Dans ce cas, la partie 12 définit une enveloppe étanche entourant au moins partiellement, de préférence complètement la partie 11 ayant une structure lacunaire (sauf en partie supérieure de la partie 11 ayant une structure lacunaire, cette partie supérieure ouverte étant destinée à être fermée par un couvercle). A cet effet, une paroi, externe ou interne, qui délimite la partie 12 est étanche. Alternativement, la partie 12 est réalisée dans un matériau plein.

Le raccord pneumatique 23 est destiné à être relié à une pompe à vide afin d'extraire le liquide de mouillage de la préforme via la partie 11. Cette extraction de liquide par le vide peut être effectuée en plus du séchage par chauffage ou essorage mécanique lié à l'effort de compactage appliqué sur la préforme fibreuse mouillée.

Suivant le niveau de séchage visé, le tirage de vide n'est pas indispensable. En effet, il est possible de réaliser uniquement un séchage, par exemple à une température supérieure à 100°C pour atteindre une température d'ébullition de l'eau, sans avoir à utiliser le raccord pneumatique 23.

Alternativement, il est possible de réaliser un séchage en même temps qu'un compactage au moyen d'une contreforme venant presser la préforme fibreuse contre le moule 10.

Pour un niveau de séchage optimum, il est possible de réaliser un séchage avec un tirage de vide à travers le moule 10. Un tel mode de réalisation nécessite de fermer le moule 10 et de prévoir une poche à vide autour du moule 10 pour que le vide puisse extraire le liquide de mouillage de la préforme fibreuse. Alternativement, il est possible d'utiliser un couvercle et un joint rapportés sur la face supérieure de la partie 12 dans le cas où la partie 12 comporte un fond étanche ou est fixée sur un tel fond.

Avantageusement, la partie 11 ayant une structure lacunaire et la partie 12 ayant une structure rigide forment une seule et même pièce. Ces deux parties 11 et 12 sont solidaires l'une de l'autre, et de manière inamovible. Il peut exister une continuité de matière entre la partie 11 et la partie 12. En particulier, il peut exister une continuité de matière entre les filaments 17 constituant la partie 11 et les filaments 17 constituant la partie 12. Pour réaliser la partie 11 ayant une structure lacunaire, les filaments 17 sont entrecroisés et espacés entre eux comme précédemment indiqué. Pour réaliser la partie 12 ayant une structure rigide, les filaments 17 sont disposés bord à bord de façon à réaliser un matériau plein ou sont espacés entre eux d'un très faible écart (inférieur à 0.2mm par exemple).

De préférence, l'ensemble du moule 10, ou à tout le moins la partie 11 ayant une structure lacunaire, est réalisé en résine à base de polyétherimide thermoplastique amorphe, dit PEI. Avantageusement, le matériau utilisé est un matériau de type Ultem 1010 (marque déposée) car sa température de transition vitreuse (Tg) de 215°C est compatible avec la température de séchage de l'ordre de 100°C. En outre, ce matériau présente de bonne propriétés mécaniques. Alternativement, il est possible d'utiliser un matériau de type Ultem 9085 (marque déposée) ayant une température de transition vitreuse (Tg) de 185°C.

Le moule 10, ou à tout le moins la partie 11 ayant une structure lacunaire, est de préférence obtenu par un procédé de fabrication additive par dépôt de filaments 17. Un tel procédé de fabrication est intrinsèquement bien adapté à la pièce à fabriquer, dans la mesure où la réalisation des différentes rangées de filaments peuvent être réalisées les unes après les autres par ajout successif de matière. Alternativement, le moule 10 peut être produit en fabrication additive métallique en lattices par exemple ou par tout autre procédé de fabrication adapté à l'application.

En variante, la partie 12 ayant une structure rigide est réalisée dans un matériau métallique, comme par exemple de l'aluminium, ou un matériau plastique.

Il est à noter que, dans certains cas, le moule 10 peut servir seulement au séchage de la préforme fibreuse, sans aspiration ni pressage autre que celui nécessaire pour introduire la préforme fibreuse dans le moule 10.

L'invention concerne en outre un procédé de séchage d'une préforme fibreuse comportant au moins une étape de mise en place de la préforme fibreuse à l'intérieur d'un moule de séchage 10.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. L'invention est définie par les revendications annexées.

## Revendications

1. Procédé de séchage d'une préforme fibreuse comportant au moins une étape de mise en place de la préforme fibreuse à l'intérieur d'un moule (10) de séchage d'une préforme fibreuse comportant au moins une partie (11) comprenant des faces internes (13.1-13.5) définissant une empreinte (14) du moule (10) contre laquelle est destinée à venir en contact la préforme fibreuse mouillée par un liquide de mouillage pour être mise en forme, ladite partie (11) présentant une structure lacunaire autorisant un passage du liquide de mouillage à travers ladite partie dudit moule (10), la partie (11) ayant une structure lacunaire étant constituée par une pluralité de filaments (17) entrecroisés définissant des ouvertures traversantes (18) autorisant le passage du liquide de mouillage.

2. Procédé selon la revendication 2, dans lequel un écart entre deux filaments (17) adjacents est compris entre 0.2mm et 2mm, voire entre 0.2mm et 1mm.

3. Procédé selon la revendication 1 ou 2, dans lequel le moule (10) est obtenu par un procédé de fabrication additive par dépôt de filaments (17).

4. Procédé selon l'une quelconque des revendications 1 à 3, dans lequel le moule (10) comporte en outre une partie (12) ayant une structure rigide disposée autour de la partie (11) ayant une structure lacunaire.

5. Procédé selon la revendication 4, dans lequel la partie (12) ayant une structure rigide présente une densité supérieure à la partie (11) ayant une structure lacunaire.

6. Procédé selon la revendication 4 ou 5, dans lequel la partie (12) ayant une structure rigide est réalisée dans un matériau plein.

7. Procédé selon l'une quelconque des revendications 4 à 6, dans lequel la partie (11) ayant une structure lacunaire et la partie (12) ayant une structure rigide forment une seule et même pièce.

8. Procédé selon l'une quelconque des revendications 4 à 7, dans lequel le moule (10) comporte un raccord pneumatique (23) en communication fluidique avec la partie (11) ayant une structure lacunaire, la partie (12) ayant une structure rigide définissant une enveloppe étanche entourant au moins partiellement la partie (11) ayant une structure lacunaire.

9. Procédé selon l'une quelconque des revendications 1 à 8, dans lequel la partie (11) ayant une structure lacunaire est réalisé en résine à base de polyétherimide thermoplastique amorphe.

## Patentansprüche

1. Verfahren zum Trocknen eines faserigen Vorformlings, umfassend mindestens einen Schritt des Einlegens des faserigen Vorformlings in eine Form (10) zum Trocknen eines faserigen Vorformlings mit mindestens einem Teil (11) mit Innenflächen (13.1-13.5), welche eine Vertiefung (14) der Form (10) bilden, gegen welche der mit einer Benetzungsflüssigkeit benetzte faserige Vorformling zum Formen in Kontakt kommen soll, wobei dieser Teil (11) eine lückenhafte Struktur aufweist, die den Durchtritt der Benetzungsflüssigkeit durch diesen Teil der Form (10) ermöglicht, wobei der Teil (11) mit einer lückenhaften Struktur aus einer Mehrzahl von ineinandergreifenden Filamenten (17) besteht, die Durchgangsöffnungen (18) bilden, welche den Durchtritt der Benetzungsflüssigkeit ermöglichen.

2. Verfahren nach Anspruch 2, wobei der Abstand zwischen zwei benachbarten Filamenten (17) zwischen 0,2mm und 2mm oder auch zwischen 0,2mm und 1mm liegt.

3. Verfahren nach Anspruch 1 oder 2, wobei die Form (10) durch ein additives Fertigungsverfahren mit Ablagerung von Filamenten (17) hergestellt wird.

4. Verfahren nach einem der Ansprüche 1 bis 3, wobei die Form (10) ferner ein Teil (12) mit einer starren Struktur umfasst, die um das Teil (11) mit einer lückenhaften Struktur angeordnet ist.

5. Verfahren nach Anspruch 4, wobei der Teil (12) mit einer starren Struktur eine höhere Dichte als der Teil (11) mit einer lückenhaften Struktur aufweist.

6. Verfahren nach Anspruch 4 oder 5, wobei der Teil (12) mit einer starren Struktur aus einem festen Material besteht.

7. Verfahren nach einem der Ansprüche 4 bis 6, wobei der Teil (11) mit einer lückenhaften Struktur und der Teil (12) mit einer starren Struktur ein und dasselbe Stück bilden.

8. Verfahren nach einem der Ansprüche 4 bis 7, wobei die Form (10) einen pneumatischen Anschluss (23) umfasst, der in fluidischer Verbindung mit dem Teil (11) mit einer lückenhaften Struktur steht, wobei der Teil (12) eine starre Struktur aufweist, die eine abgedichtete Hülle definiert, welche den Teil (11) mit der lückenhaften Struktur zumindest teilweise umschließt.

9. Verfahren nach einem der Ansprüche 1 bis 8, wobei der Teil (11) mit einer lückenhaften Struktur aus amorphem thermoplastischem Polyetherimid-Harz besteht.

## Claims

1. A method for drying a fibrous preform comprising at least one step of placing the fibrous preform into a mold (10) for drying a fibrous preform comprising at least one part (11) comprising internal faces (13.1-13.5) defining a recess (14) of the mold (10) against which the fibrous preform, wetted by a wetting liquid, is intended to come into contact for shaping, said part (11) having a porous structure allowing the passage of the wetting liquid through said part of said mold (10), the part (11) having a porous structure being made up of a plurality of interlaced filaments (17) defining through openings (18) allowing the passage of the wetting liquid.

2. The method according to Claim 2, wherein a gap between two adjacent filaments (17) is between 0.2mm and 2mm, or even between 0.2mm and 1mm.

3. The method according to Claim 1 or 2, wherein the mold (10) is obtained by an additive manufacturing process with deposition of filaments (17).

4. The method according to any one of the claims 1 to 3, wherein the mold (10) further comprises a part (12) having a rigid structure arranged around the part (11) having a gap structure.

5. The method according to Claim 4, wherein the part (12) having a rigid structure has a higher density than the part (11) having a porous structure.

6. The method according to Claim 4 or 5, wherein the part (12) having a rigid structure is made of a solid material.

7. The method according to any one of the claims 4 to 6, wherein the part (11) having a gap structure and the part (12) having a rigid structure form one and the same piece.

8. The method according to any one of the claims 4 to 7, wherein the mold (10) comprises a pneumatic fitting (23) in fluidic communication with the part (11) having a gap structure, the part (12) having a rigid structure defining a sealed envelope surrounding at least partially the part (11) having a gap structure.

9. The method according to any one of the claims 1 to 8, wherein the part (11) having a gap structure is made of amorphous thermoplastic polyetherimide-based resin.
